# EUROPEAN PATENT SPECIFICATION

(11) **EP 3 034 867 B1**
(45) Date of publication and mention of the grant of the patent: **14.02.2018**
(21) Application number: 14382544.6
(22) Date of filing: 19.12.2014
(51) Int. Cl.: F03D 7/02

(54) **Fretting corrosion and methods of operating a wind turbine**
Kontaktkorrosion und Verfahren zum Betreiben einer Windturbine
Corrosion de contact et procédés de fonctionnement d'une turbine éolienne

(43) Date of publication of application: 22.06.2016
(73) Proprietor: ALSTOM Renewable Technologies, 38041 Grenoble - Cedex 9 (FR)
(72) Inventor: Betran Palomas, Jaume, 08172 Sant Cugat del Vallès (ES); Nualart, Pau, 08401 Granollers (ES); Mercadé, Jordi, 08023 Barcelona (ES)
(74) Representative: ZBM Patents - Zea, Barlocci & Markvardsen

(56) References cited:
- EP-A1- 2 757 252
- EP-A2- 2 253 841
- EP-A2- 2 463 521
- US-A1- 2013 134 711

## Description

The present disclosure relates to methods of operating a wind turbine comprising at least one geared pitch system. The disclosure further relates to wind turbines suitable for performing such methods.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower.

A variable speed wind turbine may typically be controlled by varying the generator torque and the pitch angle of the blades. As a result, aerodynamic torque, rotor speed and electrical power will vary.

A common prior art control strategy of a variable speed wind turbine is described with reference to figure 1 and can be found for instance in EP 2 757 252 A1. In figure 1, the operation of a typical
variable speed wind turbine is illustrated in terms of the pitch angle (β), the electrical power generated (P), the generator torque (M) and the rotational velocity of the rotor (ω), as a function of the wind speed.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective is generally to maximize power output while maintaining the pitch angle of the blades constant so as to capture maximum energy. In order to achieve this objective, the generator torque may be varied so as to control the rotor speed in order to keep the tip speed ratio λ (tangential velocity of the tip of the rotor blades divided by the prevailing wind speed) constant so as to maximize the power coefficient Cp.

In order to maximize power output and keep Cp constant at its maximum value, the rotor torque may be set in accordance with the following equation:
*T* = *k.ω*², wherein k is a constant, and ω is the rotational speed of the generator. In a direct drive wind turbine, the generator speed substantially equals the rotor speed. In a wind turbine comprising a gearbox, normally, a substantially constant ratio exists between the rotor speed and the generator speed.

In this region, the power coefficient is thus optimized by maintaining the tip speed ratio at a constant optimum value. The aerodynamics of the blade may generally be based in the performance in this operational range. Theoretically, the wind turbine will frequently operate in this operational range and it thus makes sense to optimize the turbine's performance in this range. However, this implies that the aerodynamic design of the blades may not be optimized for other operational ranges.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In summary, in the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

And, in the supra-nominal zone of operation, i.e. at winds speeds at or above the nominal wind speed, the maximum available energy in the wind stream is very consciously not captured. That is, the blades are actively pitched to a position in which they "catch" less wind, and generate less torque than possible. This is mainly done to limit the loads on the wind turbine. Lift and drag can thus be changed to influence the aerodynamic torque on the rotor. This way, even though the wind speed may increase, the torque transmitted by the rotor to the generator can remain substantially the same.

Even though the wind speed is normally determined in an indirect manner by determining the rotor's rotational speed, e.g. by measuring the rotational speed of the generator, it may be regarded that the control is carried out as a function of the wind speed. Based on e.g. the rotational speed of the generator, the control may be implemented by varying the generator torque and/or the blade pitch angle.

When the wind turbine is not operating, the blades may assume a vane position (e.g. at or around 90° pitch angle) to minimize the loads on the blades. During most of the wind turbine's life, a blade may however be in the same prevailing pitch position which is the default position at wind speeds equal to or below nominal wind speed. The nominal wind speed, cut-in wind speed and cut-out wind speed may of course vary depending on the wind turbine design.

For the purposes of pitching the blades, each blade may be mounted on the hub employing a pitch system. In many known turbines, such a pitch system may comprise a pitch bearing arranged between the hub and the blade and a pitch drive which may include a hydraulic or electric motor. The motor, through the use of a reduction gearing (sometimes referred to as a "reductor", or as a "reduction gear") can drive an actuating gear. The actuating gear (pinion) may generally be arranged to mesh with an annular gear provided on the wind turbine blade to set the blade into rotation and change its pitch angle. It is also possible however, to provide the annular gear on the hub, whereas the motor and the actuating gear may be mounted on the blade. Such pitch systems involving a gear (e.g. a pinion) meshing with another gear (e.g. an annular gear or annular gear segment) are herein referred to as "geared" pitch systems.

It is further known to provide an individual pitch system (comprising a separate motor and a separate control) for each individual wind turbine blade of a rotor. Also, it is known to provide a common pitch system wherein the pitch angle of the blades is the same for all blades on a rotor. Such a common pitch system may comprise a single motor or may comprise a plurality of motors, one for each blade.

During operation of the wind turbine, forces may be acting on the blades that result in a constantly varying torque around the blade's longitudinal axis. These forces may include the aerodynamic torque around the longitudinal axis of the blade. Furthermore, since the blade's centre of mass is usually not located exactly on its rotating axis, the weight of the blade may exercise an additional torque around the blade's longitudinal axis. Both these forces are non-constant, largely cyclical and tend to rotate the blade out of the position determined by the pitch control system.

When pitch systems involving gearing are used, the varying torque may result in flanks of the teeth of the actuating gear (pinion) and the annular gear repeatedly touching each other in the prevailing blade position. Such repetitive contact between teeth may remove thin metallic particles, and may create a tooth print in the contacting flanks of the annular gear and the pinion. This repetitive contact may thus lead to fretting corrosion and premature wear. Since the pitch position at or below nominal wind speed i.e. the below rated pitch position is the prevailing position for most of the time for most wind turbines, the contact between the teeth and its consequences is usually concentrated on the same teeth.

It is known to provide additional devices such as, for example, a rotor blade adjuster device comprising a pinion and guide means for displacing the rotor blade adjuster device between two positions in which cooperation between the pinion and the crown gear is possible. Document WO2010045914 describes such systems. However these systems may involve a great number of additional components and may be rather cumbersome.

It is also known to provide lubricating devices in order to at least in part prevent fretting corrosion. For example, document US7244097 provides a lubricating device configured such that, due to a temporary displacement of the driving toothed wheel from an operating position into a lubricating position, the lubricating device can be engaged with a defined point of the gearing or the driving toothed wheel, so as to transfer lubricant. However such designs are also quite cumbersome, costly and furthermore lubrication cannot be constantly provided.

Further known systems provide passages drilled in the drive pinion or the slewing ring which may weaken the drive pinion or the slewing ring in which they are drilled. Other known systems provide lubricant spray nozzles oriented towards the area on which the lubricant is desired. However, in such systems the lubricant can be spread more than desirable thus contaminating the area around the pitch system.

The present disclosure provides methods of operating wind turbines having geared, e.g. electromechanical, pitch systems which are able to reduce fretting corrosion between contacting teeth in a rather cost-effective and simple manner.

### SUMMARY

In a first aspect, a method of operating a wind turbine in steady state conditions as a function of wind speed is provided. The wind turbine includes a rotor with a plurality of blades, a generator, one or more geared pitch systems for rotating the blades along their longitudinal axis and a system for varying a torque of the generator. The method comprises a sub-nominal zone of operation for wind speeds below a nominal wind speed and a supra-nominal zone of operation for wind speeds equal to or above the nominal wind speed, wherein the sub-nominal zone of operation comprises a first operational range which extends from a cut-in wind speed to a first wind speed and a second operational range extending from the first wind speed to a second wind speed. The first operational range comprises two or more sub-ranges, wherein a different constant pitch position is defined for each of the sub-ranges. The method further comprises in the first operational range, using the geared pitch systems for setting the blades in the pitch position defined for each sub-range as a function of the current wind speed, and varying the torque of the generator to maintain a rotor speed substantially constant, and in the second operational range, varying the torque of the generator as a function of wind speed so as to maintain a constant tip speed ratio.

According to this aspect, in steady-state operation over the first operational range, the provision of two or more sub-ranges having different defined pitch positions provides a variation of the pitch position in discrete steps as a function of current wind speed. This guarantees that in each defined pitch position, other teeth or at least other regions of the same teeth of the actuating gear (pinion) and the annular gear will be contacting each other. This way, fretting corrosion between contacting teeth is avoided or at least reduced thus extending lifetime of the gear (and the pinion). It is a quite a cost-effective solution as pitch mechanisms are usually present in wind turbines for rotating the blades along its longitudinal axis in accordance with instructions from a pitch control system that is also usually present in wind turbines for controlling pitch mechanisms. Therefore, in order to perform this method, wind turbines do not need additional elements, only the provision of new control strategies.

Furthermore, this solution involves changing the pitch angle in the sub-nominal zone of operation, i.e. the minimum pitch angle, as a function of wind speed. This change is done in discrete steps, two or more steps, depending on the amount of sub-ranges in which the first operational range has been divided. This contravenes prior art practice as the minimum pitch angle of the blades is usually not changed in the sub-nominal zone of operation. By employing stepwise changes, energy consumption of the pitch system is less than if the pitch system were to act continuously.

In a second aspect, a wind turbine is provided. The wind turbine comprises a rotor with a plurality of blades, a generator, a system for varying a torque of the generator, one or more pitch mechanism for rotating the blades around their longitudinal axis and a control unit configured to carry out the method substantially as hereinbefore described.

### BRIEF DESCRIPTION OF THE DRAWINGS

Non-limiting examples of the present disclosure will be described in the following, with reference to the appended drawings, in which:
Figure 1 shows a typical power curve of a wind turbine;
Figure 2a and 2b show different examples of output obtained using the present methods,
Figure 3 and 4 show further examples of output that may be obtained using further examples of the present methods.

### DETAILED DESCRIPTION OF EXAMPLES

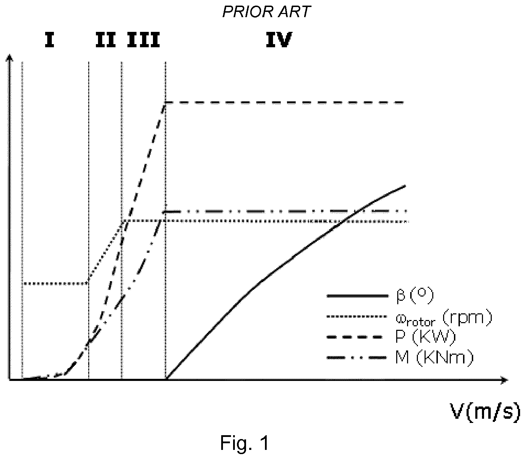

The power curve of figure 1 has been discussed before. In figure 1, the continuous line shows the pitch angle β versus incoming wind speed V. In this theoretical steady state situation, in the sub-nominal zone of operation, i.e. in the first, second and third operational ranges I, II and III, (from e.g. approximately 3 m/s to approximately 11 m/s) the pitch angle is not varied from a minimum pitch angle of e.g. 0°. In alternative cases, the minimum or default pitch angle may be any other amount close to 0° defined as default pitch angle depending on circumstances.

Throughout the following figures the same reference numbers will be used for matching parts.

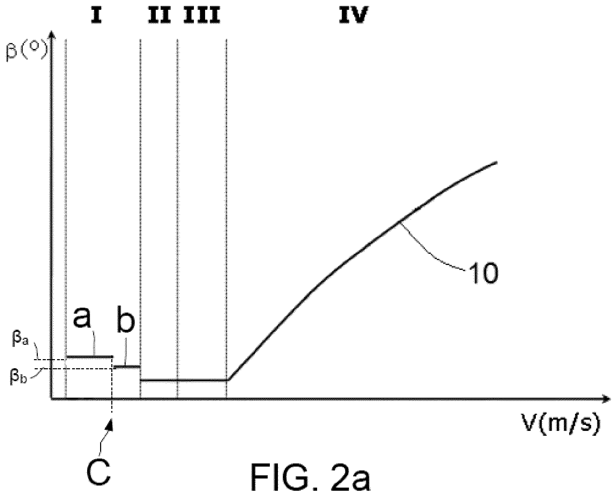

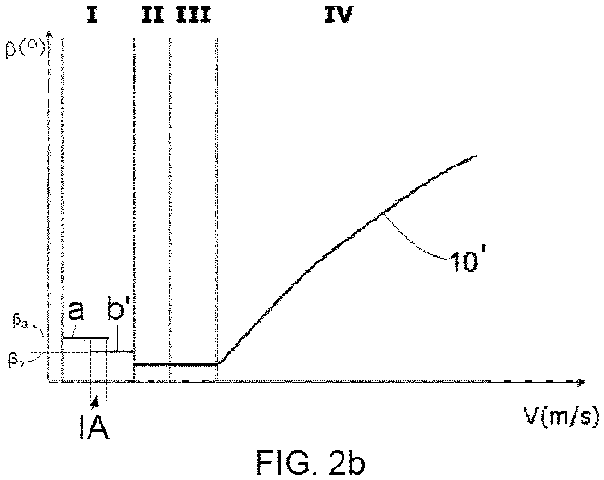

Figures 2a and 2b show examples of an output pitch angle β versus incoming wind speed V obtained using a method substantially as hereinbefore described. In these examples the first operational range I may be divided in two sub-ranges and a different constant pitch angle may be defined for each sub-range. In alternative examples, other number of sub-ranges may be provided e.g. three or more, each having a different constant pitch angle. In these examples, the minimum or default pitch angle may be e.g. 2°. Alternatively, any other amount close to 0° may be defined as default pitch angle depending on circumstances.

In the example of figure 2a, curve 10 shows that a first sub-range a may extend, for example from e.g. 3 m/s to 4.5 m/s and the defined pitch angle βₐ may be approximately 7° and the second sub-range b may extend from e.g. 4.5 m/s to 6 m/s and the defined pitch angle β_{b} may be approximately 4.5°. In this example, the sub-ranges a and b may be consecutives and may only overlap in one of their limits C corresponding to an upper limit of sub-range a and a lower limit of sub-range b. In this example limit C may thus be established at 4.5 m/s. In this example, two different defined pitch positions are thus defined in which other teeth of the actuating gear and annular gear may be contacting each other depending on the current wind speed. This avoids or at least reduces fretting corrosion between contacting teeth. In alternative examples, more sub-ranges may be defined each having a defined pitch angle. In some examples the different pitch angles/positions provided for each sub-range may vary from each other around 2 - 3°, for example 2.5°. In further examples, this variation may generally be between 1° to 5°. In some examples, the step between one pitch position and another may be such that it involves changing a single tooth of the crown. The amount of degrees thus depends on the number of crown teeth. In alternative examples, the step between sub-ranges may involve changing more than one tooth.

In the example of figure 2b, curve 10' shows that a first sub-range a may extend from e.g. 3 m/s to 5 m/s and the defined pitch angle βₐ may be approximately 7° as in the example of figure 2a but the second sub-range b' may extend from e.g. 4 m/s to 6 m/s and the defined pitch angle β_{b} may be approximately 4.5°. In this example, an intersection area IA may be defined between e.g. 4 m/s to 5 m/s. In this example, the method may further comprise maintaining the pitch angle defined for a sub-section along the intersection area IA. This means that the value of the pitch angle within the intersection area IA may depend on the previous pitch angle value. In this example, if a value of the pitch angle before reaching the intersection area IA belongs to the sub-range a, the defined pitch angle βₐ will be maintained up to 5 m/s (upper limit of sub-range a). On the contrary if a value of the pitch angle before reaching the intersection area IA belongs to the sub-range b', the defined pitch angle β_{b} will be maintained up to 4 m/s (lower limit of sub-range b'). By doing this, actuations of the pitch system are reduced thus minimizing hysteresis problems. Power consumption of the pitch systems is thus also reduced. In alternative examples, more than two sub-ranges may also be foreseen.

In these examples, the defined pitch position for each sub-range may also vary from each other approximately 2 - 3°. In further examples, this variation may be slightly smaller or larger. Also, depending on circumstances other teeth of the actuating gear (pinion) and the annular gear will be contacting each other thus extending lifetime of the gear and/or the pinion.

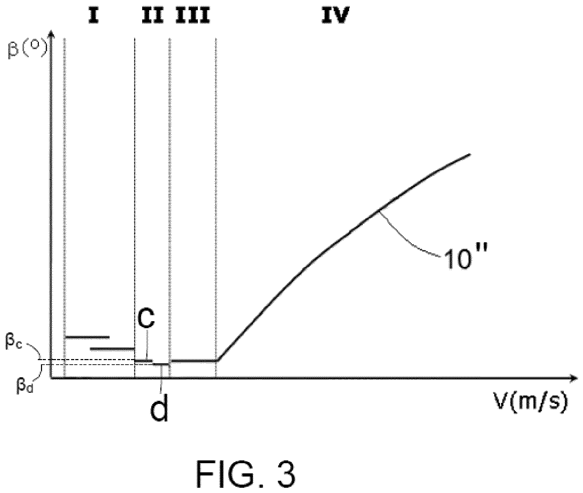

In some examples, the method may further comprise dividing the second operational range II in two or more sub-ranges, each having a different defined pitch position and using the geared pitch system for setting the blades in the pitch position defined for each sub-range as a function of the current wind speed substantially as explained for the first operational range in connection with figures 2a and 2b. Figure 3 shows an example of these methods.

The example of figure 3 differs from that of figure 2b in that the second operational range II may also be divided in sub-ranges. In particular curve 10" shows two sub-ranges c and d. In alternative examples dividing the second operational range in two or more sub-ranges may also be combined with a first operational range as shown in the example of figure 2a. Furthermore, more sub-ranges may also be foreseen.

In curve 10" sub-range c may extend, for example, from 6 m/s to 7.5 m/s and the defined pitch angle β_{c} may be the minimum pitch angle, e.g. approximately 2°, and the second sub-range d may extend from e.g. 7.5 m/s to 8.5 m/s and the defined pitch angle β_{d} may be e.g. 1.5°. In this example, the sub-ranges c and d may be consecutives in a similar manner as explained for the first operational range in accordance with figure 2a. In alternative examples, the sub-ranges may overlap as explained for the first operational range in connection with figure 2b.

In general in the second operational range, as the blades are normally designed for maximum performance in this operational range, the defined pitch position for each sub-range may vary from approximately 0.5° to approximately 1°. This way at least other regions of the same teeth of the actuating gear (pinion) and the annular gear will be contacting each other. This reduces at least in part premature wear of contacting teeth without substantially interfering in the optimum performance of this operational range. These very slightly different pitch positions may also take into account the phenomenon of torsion of the blades at higher wind speeds within the second range. As the blades are subjected to the torsion, their aerodynamic performance may not correspond exactly to their simulated or calculated theoretical performance. A slightly negative pitch may compensate for this effect.

As was shown for the first operational range, in this example, stepwise changes of pitch positions are employed. This thus means that the pitch system does not need to act continuously and wear and energy use of the pitch system can thus be less.

In the examples shown so far, the pitch position is maintained constant along the third operational range. The problem of fretting corrosion could thus theoretically persist if the wind speed were to stay within the third operational range for longer periods of time. However, it is relatively unlikely that the wind speed stays within the third operational range for a long time without incidentally increasing beyond the nominal wind speed. In the supra-nominal zone, the blades will be pitched so as to maintain aerodynamic torque substantially constant. The pitch position will thus at least incidentally be changed, so that different teeth touch other and new grease or lubricant can be provided at the location most vulnerable to the problem of fretting corrosion. This grease or lubricant is brought there by the different teeth that enter into contact.

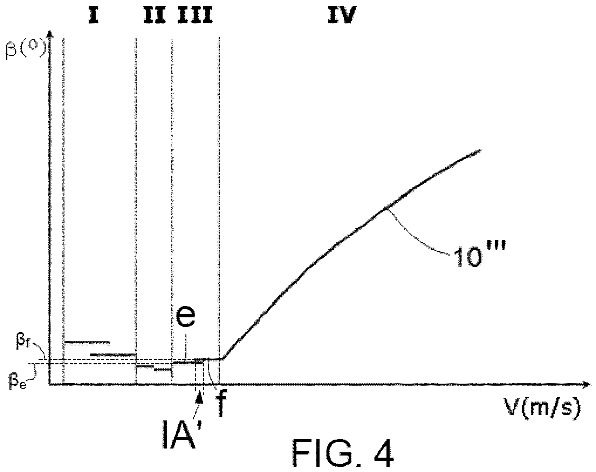

In still further examples, the method may further comprise dividing the third operational range in two or more ranges and defining a different constant pitch position for each sub-range as a function of wind speed substantially as explained for the first and second operational ranges in connection with figures 2a, 2b and 3. Figure 4 shows an example of these methods. It is submitted that all possible combinations of this example with the examples of figures 2a, 2b and 3 may also be foreseen.

The example of figure 4 differs from that of figure 3 in that the third operational range III may also be divided in sub-ranges, in particular curve 10"' shows two sub-ranges e and f. In alternative examples, three or more sub-ranges may also be foreseen.

In curve 10"' sub-range e may extend, for example, from 8.5 m/s to 10 m/s and the defined pitch angle βₑ may be approximately 2,5° and the second sub-range f may extend from e.g. 9.5 m/s to 11 m/s and the defined pitch angle β_{f} may be e.g. 3°. In this example, the sub-ranges e and f may overlap in an intersection IA' as explained for the first operational range in accordance with figure 2b. In alternative examples, the sub-ranges may be consecutive as explained for the first operational range in connection with figure 2a.

Again in this example, by employing stepwise changes as opposed to continuous changes, the wear and energy consumption of the pitch system can be relatively low.

In this example, the blades may be rotated to a positive pitch position thus reducing drag and reducing lift, i.e. reducing the loads on the blade.

It will be clear to the person skilled in the art that the precise numeric values of wind speeds defining sub-ranges a ,b, b', c, d, e and f and/or pitch angles βₐ, β_{b}, β_{c}, β_{d}, βₑ, and β_{f} may vary in further examples. The precise numeric values may depend e.g. on site, tower height, blade design, and pitch system design (e.g. number of teeth of pinion and of annular gear).

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method of operating a wind turbine in steady state conditions as a function of wind speed, wherein the wind turbine includes a rotor with a plurality of blades, a generator, one or more geared pitch systems for rotating the blades along their longitudinal axis and a system for varying a torque of the generator, and
the method comprising a sub-nominal zone of operation for wind speeds below a nominal wind speed and a supra-nominal zone of operation for wind speeds equal to or above the nominal wind speed, wherein
the sub-nominal zone of operation comprises a first operational range which extends from a cut-in wind speed to a first wind speed and a second operational range extending from the first wind speed to a second wind speed, wherein
the first operational range comprises two or more sub-ranges, wherein a different constant pitch position is defined for each of the sub-ranges, and the method further comprising
in the first operational range, using the geared pitch systems for setting the blades in the pitch position defined for each sub-range as a function of the current wind speed, and varying the torque of the generator to maintain a rotor speed substantially constant, and
in the second operational range, varying the torque of the generator as a function of wind speed so as to maintain a constant tip speed ratio.

2. The method of claim 1, wherein the sub-ranges of the first operational range overlap in an intersection area and the pitch position defined for each sub-range is maintained along the intersection area.

3. The method of any of claims 1 or 2, wherein the sub-ranges are consecutives such that an upper limit of a lower sub-range coincides with a lower limit of an upper sub-range.

4. The method of any of claims 1 - 3, wherein the different constant pitch positions in the first operational range vary from each other approximately 1° - 5°.

5. The method of any of claims 1 - 4, wherein the method further comprises dividing the second operational range in two or more sub-ranges, wherein a different constant pitch position is defined for each of the sub-ranges and using the geared pitch systems for setting the blades in the pitch position defined for each sub-range as a function of the current wind speed.

6. The method of claim 5, wherein the different constant pitch positions in the second operational range vary from each other approximately 0.5° - to approximately 1°.

7. The method of any of claims 1 - 6, wherein the sub-nominal zone of operation further comprises a third operational range extending from the second wind speed to the nominal wind speed and the method further comprises in the third operational range, varying the torque of the generator to maintain the speed of the rotor substantially constant and equal to a nominal speed defined for the rotor.

8. The method of claim 7, further comprising dividing the third operational range in two or more sub-ranges, wherein a different constant pitch position is defined for each of the sub-ranges and using the geared pitch systems for setting the blades in the pitch position defined for each sub-range as a function of the current wind speed.

9. The method of claim 7 or 8, wherein a single pitch position is defined for the entire third operational range.

10. A wind turbine comprising a rotor with a plurality of blades, a generator, one or more geared pitch systems for rotating the blades around along their longitudinal axis, a system for varying the generator torque and a control unit configured to perform a method according to any of claims 1 - 9.

## Patentansprüche

1. Ein Verfahren zum Betrieb von einer Windturbine im stationären Zustand in Abhängigkeit von der Windgeschwindigkeit, wobei die Windturbine einen Rotor mit einer Vielzahl von Blättern, einen Generator, ein oder mehrere mit Getriebe versehene Blattverstellsysteme zur Drehung der Blätter um deren Längsachse und ein System zur Änderung eines Drehmoments des Generators umfasst, und
wobei das Verfahren ein subnominales Betriebsfeld für Windgeschwindigkeiten unterhalb einer Nennwindgeschwindigkeit und ein supranominales Betriebsfeld für Windgeschwindigkeiten entsprechend oder oberhalb der Nennwindgeschwindigkeit umfasst, wobei
das subnominale Betriebsfeld einen ersten Betriebsbereich umfasst, der von einer Einschaltwindgeschwindigkeit bis zu einer ersten Windgeschwindigkeit reicht und einen zweiten Betriebsbereich umfasst, der von der ersten Windgeschwindigkeit bis zu einer zweiten Windgeschwindigkeit reicht, wobei
der erste Betriebsbereich zwei oder mehrere Teilbereiche umfasst, wobei eine verschiedene konstante Blattverstellposition für jeden Teilbereich definiert wird, und das Verfahren weiterhin folgendes umfasst
im ersten Betriebsbereich, das Verwenden der mit Getriebe versehenen Blattverstellsysteme zur Einstellung der Blätter in die für jeden Teilbereich in Abhängigkeit von der momentanen Windgeschwindigkeit definierte Blattverstellposition, und das Ändern des Drehmoments des Generators, um eine Rotordrehzahl im Wesentlichen konstant zu halten, und
im zweiten Betriebsbereich, das Ändern des Drehmoments des Generators in Abhängigkeit von der Windgeschwindigkeit, um eine konstante Schnelllaufzahl zu halten.

2. Das Verfahren des Anspruchs 1, wobei die Teilbereiche des ersten Betriebsbereichs sich in einem Schnittbereich überlappen und die für jeden Teilbereich definierte Blattverstellposition im Schnittbereich gehalten wird.

3. Das Verfahren von einem der Ansprüche 1 oder 2, wobei die Teilbereiche aufeinander folgend sind, so dass eine Obergrenze eines unteren Teilbereichs mit einer Untergrenze eines oberen Teilbereichs zusammenfällt.

4. Das Verfahren von einem der Ansprüche 1 - 3, wobei die verschiedenen konstanten Blattverstellpositionen im ersten Betriebsbereich ca. 1° - 5° voneinander abweichen.

5. Das Verfahren von einem der Ansprüche 1 - 4, wobei das Verfahren weiterhin folgendes umfasst: das Teilen des zweiten Betriebsbereichs in zwei oder mehrere Teilbereiche, wobei eine verschiedene konstante Blattverstellposition für jeden der Teilbereiche definiert wird und das Verwenden der mit Getriebe versehenen Blattverstellsysteme zum Einstellen der Blätter in die für jeden Teilbereich in Abhängigkeit von der momentanen Windgeschwindigkeit definierte Blattverstellposition.

6. Das Verfahren des Anspruchs 5, wobei die verschiedenen konstanten Blattverstellpositionen im zweiten Betriebsbereich von ca. 0,5° - bis ca. 1° voneinander abweichen.

7. Das Verfahren von einem der Ansprüche 1 - 6, wobei das subnominale Betriebsfeld weiterhin einen von der zweiten Windgeschwindigkeit bis zur Nennwindgeschwindigkeit reichenden dritten Betriebsbereich umfasst und das Verfahren weiterhin im dritten Betriebsbereich das Ändern des Drehmoments des Generators umfasst, um die Rotordrehzahl im Wesentlichen konstant und bei einer für den Rotor definierten Nenndrehzahl zu halten.

8. Das Verfahren des Anspruchs 7, weiterhin umfassend das Teilen des dritten Betriebsbereichs in zwei oder mehrere Teilbereiche, wobei eine verschiedene konstante Blattverstellposition für jeden der Teilbereiche definiert wird und das Verwenden der mit Getriebe versehenen Blattverstellsysteme zum Einstellen der Blätter in die für jeden Teilbereich in Abhängigkeit von der momentanen Windgeschwindigkeit definierte Blattverstellposition.

9. Das Verfahren des Anspruchs 7 oder 8, wobei eine einzige Blattverstellposition für den gesamten dritten Betriebsbereich definiert wird.

10. Eine Windturbine umfassend einen Rotor mit einer Vielzahl von Blättern, einen Generator, ein oder mehrere mit Getriebe versehene Blattverstellsysteme zur Drehung der Blätter um deren Längsachse, ein System zur Änderung des Generatordrehmoments, und eine zur Durchführung von einem Verfahren nach einem der Ansprüche 1 - 9 konfigurierte Steuereinheit.

## Revendications

1. Un procédé de fonctionnement d'une éolienne à l'état stationnaire en fonction de la vitesse du vent, dans lequel l'éolienne inclut un rotor avec une pluralité de pales, un générateur, un ou plusieurs systèmes de réglage de pas de pale à engrenage pour faire pivoter les pales autour de leur axe longitudinal et un système pour faire varier un moment du générateur, et
le procédé comprenant une région sous-nominale de fonctionnement pour des vitesses du vent au-dessous d'une vitesse nominale du vent et une région supra-nominale de fonctionnement pour des vitesses du vent égales à ou au-dessus de la vitesse nominale du vent, dans lequel
la région sous-nominale de fonctionnement comprend une première plage de fonctionnement qui va d'une vitesse de démarrage à une première vitesse du vent et une deuxième plage de fonctionnement qui va de la première vitesse du vent à une deuxième vitesse du vent, dans lequel
la première plage de fonctionnement comprend deux ou plus sous-plages, dans lequel une position de pas de pale constante différente est définie pour chacune des sous-plages, et le procédé comprenant en outre
dans la première plage de fonctionnement, utiliser les systèmes de réglage de pas de pale à engrenage pour situer les pales dans la position de pas de pale définie pour chaque sous-plage en fonction de la vitesse du vent instantanée, et faire varier le moment du générateur afin de maintenir une vitesse du rotor essentiellement constante, et
dans la deuxième plage de fonctionnement, faire varier le moment du générateur en fonction de la vitesse du vent afin de maintenir une vitesse spécifique constante.

2. Le procédé de la revendication 1, dans lequel les sous-plages de la première plage de fonctionnement se chevauchent dans une région d'intersection et la position de pas de pale définie pour chaque sous-plage est maintenue le long de la région d'intersection.

3. Le procédé de l'une quelconque des revendications 1 ou 2, dans lequel les sous-plages sont consécutives de façon qu'une limite supérieure d'une sous-plage inférieure coïncide avec une limite inférieure d'une sous-plage supérieure.

4. Le procédé de l'une quelconque des revendications 1 - 3, dans lequel les positions de pas de pale constantes différentes dans la première plage de fonctionnement varient les unes des autres d'environ 1° - 5°.

5. Le procédé de l'une quelconque des revendications 1 - 4, dans lequel le procédé comprend en outre diviser la deuxième plage de fonctionnement en deux ou plusieurs sous-plages, dans lequel une position de pas de pale constante différente est définie pour chacune des sous-plages et utiliser les systèmes de réglage de pas de pale à engrenage pour situer les pales dans la position de pas de pale définie pour chaque sous-plage en fonction de la vitesse du vent instantanée.

6. Le procédé de la revendication 5, dans lequel les positions de pas de pale constantes différentes dans la deuxième plage de fonctionnement varient les unes des autres d'environ 0,5° - à environ 1°.

7. Le procédé de l'une quelconque des revendications 1 - 6, dans lequel la plage de fonctionnement sous-nominale comprend en outre une troisième plage de fonctionnement qui va de la deuxième vitesse du vent à la vitesse du vent nominale et le procédé comprend en outre dans la troisième plage de fonctionnement, faire varier le moment du générateur afin de maintenir la vitesse du rotor essentiellement constante et égale à une vitesse nominale définie pour le rotor.

8. Le procédé de la revendication 7, comprenant en outre diviser la troisième plage de fonctionnement en deux ou plusieurs sous-plages, dans lequel une position de pas de pale constante différente est définie pour chacune des sous-plages et utiliser les systèmes de réglage de pas de pale à engrenage pour situer les pales dans la position de pas de pale définie pour chaque sous-plage en fonction de la vitesse du vent instantanée.

9. Le procédé de la revendication 7 ou 8, dans lequel une seule position de pas de pale est définie pour toute la troisième plage de fonctionnement.

10. Une éolienne comprenant un rotor avec une pluralité de pales, un générateur, un ou plusieurs systèmes de réglage de pas de pale à engrenage pour faire pivoter les pales autour de leur axe longitudinal, un système pour faire varier le moment du générateur, et une unité de commande configurée pour mettre à exécution un procédé selon l'une quelconque des revendications 1 - 9.
